# EUROPEAN PATENT APPLICATION

(11) **EP 2 189 705 A1**
(43) Date of publication of application: **26.05.2010**
(21) Application number: 08425754.2
(22) Date of filing: 25.11.2008
(51) Int. Cl.: F17C 5/00, B60K 28/10

(54) **Refuelling safety method and device for a vehicle fuelled with gas transportation fuel, such as cng, lpg, hydrogen**

(71) Applicant: Iveco S.p.A., 10156 Torino (IT)
(72) Inventor: Bertozzi, Franco, 10040 Druento (IT)
(74) Representative: Borsano, Corrado

(57) **Abstract**

The present invention relates to a refuelling safety method for a vehicle fuelled with gas transportation fuel, such as CNG (Compressed Natural Gas) or LPG (Liquefied Petroleum Gas) or hydrogen, which provides the engine stopping in case of opening of the fuel filler neck closing element on the vehicle tank when the vehicle is stationary. Moreover with vehicle speed below a threshold, if the closing element is open, the engine is stopped; with vehicle speed higher than a threshold, the engine is left on regardless of the open or closed condition of the closing element.

## Description

The present invention refers to a refuelling safety method and device for a vehicle fuelled with gas transportation fuel, such as CNG (Compressed Natural Gas) or LPG (Liquefied Petroleum Gas)or hydrogen.

The refuelling operations in every type of vehicle fuelled with CNG (Compressed Natural Gas) or LPG (Liquefied Petroleum Gas) or hydrogen involve serious safety problems in order to avoid gas leakages risks that may cause fires or explosions.

Safety measures are already regularly adopted in the filling stations, and such vehicles are already equipped with some particular characteristics that reduce the situations of risk and danger.

For example the filler neck of the fuel supply gun in the fuel pump pipe of the filling station, and the fuel filler neck on the vehicle tank are equipped with an internal hermetic seal which opens only when they come into contact for refuelling, and then immediately seal back hermetically when the filler neck of the supply gun is removed.

There is then a mechanical security device which guarantees a perfect grip of the two filler necks when the fuel supply gun is inserted and that is manually released at the end.

The fuel filler neck on the vehicle tank is normally equipped with an external hermetic sealing cap as a further security device. In some vehicles there is a sunken compartment in the vehicle bodywork, suitable to contain the fuel filler neck on the vehicle tank, closed by a door with possible lock and key.

The operations carried out by the person who controls the fuel supply therefore are to fasten the filler neck of the supply gun to the fuel filler neck on the vehicle tank, to turn a tap on in order to supply the fuel, at the end of the refuelling turn the tap off and unfasten the filler neck of the supply gun. If the external tap and/or a door are present, they are first opened at the beginning of the fuel supply and then closed at the end.

All these precautions and safety devices and operations are made useless by possible careless actions made normally unintentionally without malicious intent, such as for example to start off again before removing the supply filler neck. In this case the pipe of the fuel pump is torn provoking a gas leakage and consequently fire or explosion hazard. A further hazard is caused by forgetting to close back the tap and/or the door.

Therefore the aim of the present invention is to provide a refuelling safety method and device for a vehicle fuelled with gas transportation fuel, such as CNG (Compressed Natural Gas) or LPG (Liquefied Petroleum Gas) or hydrogen suitable to solve the problems mentioned above.

The present invention relates to a method that guarantees the safety in the fuel supply of a vehicle fuelled with gas transportation fuel, such as CNG (Compressed Natural Gas) or LPG (Liquefied Petroleum Gas) or hydrogen, said vehicle being equipped of at least one fuel filler neck on the vehicle tank including a closing element, **characterised in that** it provides the switch off of the engine, if said closing element is opened when the vehicle is stationary.

The method according to this invention may include the following further steps:
- if the vehicle speed is below a threshold and said closing element is open, the engine is stopped;
- if the vehicle speed is higher than a threshold, the engine is left on, without considering if the closing element is open or closed.

The present invention relates in particular to a refuelling safety method and device for a vehicle fuelled with gas transportation fuel, such as CNG (Compressed Natural Gas) or LPG (Liquefied Petroleum Gas) or hydrogen, as described more fully in the claims, which are an integral part of the present description.

Further aims and advantages of the present invention will become clearer from the following detailed description of an example of a preferred embodiment, and relative alternative embodiments, which are merely illustrative and not limitative.

According to an aspect of the invention the closing door of the compartment containing the fuel filler neck on the vehicle tank is equipped with an opening/closing sensor, for example an electromagnetic sensor. The sensor may also be fixed to the external closing tap.

Moreover the vehicle is normally already equipped with a motion sensor, or an engine start sensor, or a driving shaft rotation sensor.

Then in the case in which the door or the tap are forgotten open at the end of the refuelling (this may be the case when the operator forgets to unfasten and remove the supply filler neck), the engine starting is prevented.

In any case, if the engine had been left on at the beginning of the refuelling, when the tap or door is opened it is stopped, or if the engine was off at the beginning of the refuelling the starting is prevented, so that the starter is not run, in order to avoid sparks or explosion triggers.

However, this causes an additional problem with the tap or the door, because if they are broken or their closing is defective, they may open during a trip, causing the engine stop, with evident induced safety problems.

Then a further vehicle speed check is made in order to obtain an optimal method to guarantee a safe refuelling for a vehicle fuelled with gas transportation fuel or CNG (Compressed Natural Gas) or LPG (Liquefied Petroleum Gas) or hydrogen, for any condition of the vehicle, stationary or moving, based on a check as in the following table:

| ENGINE STATUS | VEHICLE SPEED | GAS REFUELLING DOOR | STARTING POSSIBLE? | AUTOMATIC ENGINE STOP |
|---|---|---|---|---|
| OFF | 0 | CLOSED | YES | X |
| OFF | 0 | OPEN | NO | X |
| ENGINE ON | 0 | CLOSED | X | NO |
| ENGINE ON | < 5 Km/h | OPEN | X | YES |
| ENGINE ON | > 5 Km/h | CLOSED | X | NO |
| ENGINE ON | > 5 Km/h | OPENS | X | NO |

Therefore what is checked is: the engine starting and stopping; the vehicle speed; the opening and closing of the tap or door, in order to determine the possibility to start or stop the engine.

According to the table, if the engine is stopped and the vehicle is stationary (speed =0), and the door or tap are closed, than it is possible to start the engine, if on the contrary the door or tap is open it is not possible to start the engine.

If the engine is on, then:
- with speed equal to zero and door or tap closed, the engine is left on;
- with vehicle speed below a certain threshold, for example 5 Km/h, and the door or tap are open, the engine is stopped;
- with vehicle speed higher than a certain threshold, for example 5 Km/h, the engine is left on without considering if the tap or door is open or closed.
In the table, "X" means a condition not applicable.

Therefore the device for the embodiment of the described method includes the vehicular electronic control unit, at least the mentioned above sensors, that may be realized and connected to the electronic control unit in a way known.

In particular it is necessary to install an electromagnetic sensor on the door or tap suitable to report their open and closed condition to the vehicular electronic control unit.

Moreover an alarm system may be present inside the vehicle, such as for example a visual signal (warning light on the dashboard), an alarm on the cluster and/or an acoustic signal (buzzer) which reports the door or tap open condition.

The operations described above are checked by the vehicular electronic control unit which receives the signals detected by said sensors, and combines them conveniently to realize said checks.

It is evident that the operations described above may be easily carried out by appropriately programming a vehicular electronic control unit which is normally already present on the vehicle, using the programming techniques available to the person skilled in the art.

Therefore the present invention may advantageously be embodied by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Refuelling safety method for a vehicle fuelled with gas transportation fuel, such as CNG (Compressed Natural Gas) or LPG (Liquefied Petroleum Gas) or hydrogen, said vehicle being equipped of at least one fuel filler neck on the vehicle tank including a closing element, **characterised in that** it provides the switch off of the engine, if said closing element is opened when the vehicle is stationary.

2. Method according to claim 1, wherein the engine restarting is prevented until such closing element remains open.

3. Method according to claim 1 or 2, which includes the following further steps:
- if the vehicle speed is below a first threshold and said closing element is open, the engine is stopped;
- if the vehicle speed is higher than a second threshold, the engine is left on, without considering if said closing element is open or closed.

4. Method according to claim 3, wherein said first and second speed thresholds are 5 Km/h.

5. Method according to any of the previous claims, which includes a further step of acoustic and/or visual signalling inside the vehicle of the open condition of the closing element.

6. Method according to any of the previous claims, wherein one or more of the following signals are used:
- a signal coming from an opening/closing sensor of said closing element;
- a signal indicating if the engine is on, the absence of this signal indicates the condition of engine off;
- a signal indicating if the vehicle is stationary or moving;
- a signal indicating the vehicle speed.

7. Refuelling safety method for a vehicle fuelled with gas transportation fuel, such as CNG (Compressed Natural Gas) or LPG (Liquefied Petroleum Gas) or hydrogen, **characterised in that** it includes means for the embodiment of the method according to any of the previous claims.

8. Computer program which comprises program code means suited to perform the steps of the method of claims 1 to 6, when said program is run on a computer.

9. computer-readable means that comprise a recorded message, said computer-readable means comprising the program code means for performing one or more steps of the method of the claims 1 to 6, when said program is run on a computer.
